# NEUE EUROPÄISCHE PATENTSCHRIFT

(11) **EP 2 351 191 B2**
(45) Veröffentlichungstag und Bekanntmachung des Hinweises auf die Entscheidung über den Einspruch: **13.05.2020**
(45) Hinweis auf die Patenterteilung: 21.05.2014
(21) Anmeldenummer: 09737382.3
(22) Anmeldetag: 29.09.2009
(51) Int. Cl.: F04D 29/58, H02K 5/20, F03D 9/00, H02K 7/18, H02K 9/04

(54) **RINGGENERATOR**
RING GENERATOR
GÉNÉRATEUR ANNULAIRE

(30) Priorität: 08.10.2008 DE 102008050848
(43) Veröffentlichungstag der Anmeldung: 03.08.2011
(73) Patentinhaber: Wobben Properties GmbH, 26607 Aurich (DE)
(72) Erfinder: GUDEWER, Wilko, 26506 Norden (DE)
(74) Vertreter: Eisenführ Speiser
(86) Internationale Anmeldenummer: PCT/EP2009/062567
(87) Internationale Veröffentlichungsnummer: WO 2010/040659

(56) Entgegenhaltungen:
- EP-A1- 1 218 638
- EP-A1- 1 641 101
- EP-A2- 1 586 769
- EP-A2- 1 988 282
- WO-A2-2010/040659
- DE-A1-102008 050 848
- DE-C2- 19 636 591
- ES-A1- 2 156 706
- FR-A- 1 233 089
- SU-A1- 1 638 769
- US-A1- 2001 035 651
- US-A1- 2005 082 836
- US-A1- 2007 103 027
- US-A1- 2008 197 638
- US-B1- 7 431 567

## Beschreibung

Die vorliegende Erfindung betrifft einen Ringgenerator einer Windenergieanlage. Weiterhin betrifft die vorliegende Erfindung ein Verfahren zum Steuern einer Windenergieanlage und die vorliegende Erfindung betrifft eine Windenergieanlage.

Eine Windenergieanlage wandelt mittels eines elektrischen Generators aus dem Wind entnommene mechanische Arbeit in elektrische Energie um. Dabei ist ein Ringgenerator ein langsam drehender Generator, der ohne ein Getriebe zwischen dem Läufer des Generators und dem mechanischen Rotor, der Rotorblätter aufweist, auskommt. Zu diesem Zwecke weist der Ringgenerator eine Vielzahl von Polen auf. Die Anzahl kann in der Größenordnung von 20 bis hin zu 84 Polen und noch darüber liegen. Der Ringgenerator weist dabei einen verhältnismäßig großen Durchmesser im Vergleich zu seiner axialen Ausdehnung auf. Beispielsweise weist der Ringgenerator einer modernen Windenergieanlage von 7 oder mehr Megawatt Nennleistung einen Durchmesser am Luftspalt von etwa 10 m auf, wohingegen die Ausdehnung des Luftspaltes in axialer Richtung im Bereich von 1 m liegt. Dabei ist der Luftspalt bekanntermaßen der Zwischenraum zwischen Stator und Läufer eines elektrischen Generators. Der Läufer und/oder der Stator nehmen hierbei im Wesentlichen die Form eines Rings ein, was der Grund für die Bezeichnung Ringgenerator sein dürfte.

Aufgrund der langsamen Drehgeschwindigkeit eines Läufers eines Ringgenerators einer Windenergieanlage, die im Bereich von etwa 5 bis 50, insbesondere 10 bis 30 Umdrehungen pro Minute als Nenndrehzahl liegen kann, ist eine Selbstkühlung durch einen mit dem Läufer mechanisch fest verbundenen Propeller ausgeschlossen oder zumindest wenig effizient. Im Vergleich dazu sei auf andere Generatoren verwiesen, die bei Windenergieanlagen zusammen mit einem hochsetzenden Getriebe verwendet werden und Nenndrehzahlen im Bereich von einigen tausend Umdrehungen pro Minute aufweisen. Lösungen solcher Generatoren sind auf langsam drehende Ringgeneratoren nicht übertragbar.

Aus der DE 109 36 591 A1 ist ein Generator für getriebelose Windkonverter als Außenläufer bekannt. Dort ist der gesamte magnetisch wirksame Teil des Generators außerhalb einer Gondel angeordnet. Aus Gründen der Kühlung wird speziell ein Außenläufer vorgeschlagen, bei dem in radialer Sicht der Läufer außerhalb des Stators angeordnet ist. Von der innerhalb des Stators angeordneten Lagerung führen Tragarme zu dem außen angeordneten Läufer. Diese Tragarme des Läufers sind gleichzeitig als Schaufeln ausgeführt, um Kühlluft in Kühlkanäle des Stators zu fördern. Ein solcher Aufbau ist jedoch äußerst kompliziert und aufwändig.

In der DE 10 2004 046 700 B4 wird für eine Windenergieanlage mit Ringgenerator als Innenläufer vorgeschlagen, durch einen Lüfter in der Gondelverkleidung Luft in die Gondel und durch den Luftspalt des Ringgenerators zu pressen, um dadurch den Ringgenerator zu kühlen.

Als allgemeiner weiterer Stand der Technik sei auf die folgenden Dokumente verwiesen: DE 196 36 591 A1; DE 102 46 690 A1; DE 600 21 492 T2; DE 196 08 286 B4; DE 600 29 977 T2; EP 1 837 519 A2 sowie DE 102 33 947 A1.

Zur Erhöhung der Kühlung eines Ringgenerators kann der Stator insbesondere der Statorring für eine Wasserkühlung vorbereitet sein, insbesondere zum Führen eines Wasserstroms. Nachteilig hierbei ist jedoch, dass durch die Verwendung einer Wasserkühlung, insbesondere für einen metallischen Gegenstand wie den Statorring grundsätzlich Korrosionsgefahr besteht.

Aufgabe der vorliegenden Erfindung war es daher, einen Ringgenerator möglichst zu verbessern, insbesondere die Kühlung eines Ringgenerators zu erhöhen und/oder effizienter zu gestalten, oder zumindest einen alternativen Ringgenerator vorzuschlagen.

Erfindungsgemäß wird ein Ringgenerator gemäß Anspruch 1 vorgeschlagen. Nachfolgend wird zunächst ein Ringgenerator zum besseren Verständnis der Erfindung beschrieben, der nicht die Erfindung bildet, aber ein Beispiel ist, das das Verständnis der Erfindung erleichtert. Ein solcher Ringgenerator einer Windenergieanlage, der aus dem Wind entnommene mechanische Arbeit in elektrische Energie umwandelt, weist einen Stator und einen relativ zum Stator drehbar um eine Drehachse gelagerten Läufer auf. Im Zusammenhang mit dem Ringgenerator wird hier der Begriff Läufer statt Rotor verwendet, um etwaige Verwechslungen zu dem mechanischen Rotor einer Windenergieanlage auszuschließen, der im Wesentlichen aus einer Rotornabe und wenigstens einem, meist drei Rotorblättern gebildet wird. Die Verwendung des Begriffs Läufer soll keinesfalls einen Hinweis auf den verwendeten Generatortyp geben. Vorzugsweise wird aber ein Synchrongenerator verwendet.

Der Stator weist im Wesentlichen einen umlaufenden Statorring zum Aufnehmen eines Blechpakets mit Statorwicklungen auf. Eine Drehbewegung des Läufers relativ zum Stator erregt in dem Blechpaket ein wechselndes Magnetfeld, was wiederum zu einem Stromfluss in den Statorwicklungen führt und bedingt durch Verluste eine Erwärmung des Stators zur Folge hat.

Der Statorring weist Kühlkanäle zum Kühlen des Stators durch einen Luftstrom auf. Es wird somit eine zusätzliche Luftkühlung vorbereitet. Solche Kühlkanäle können sowohl für eine aktive Kühlung als auch für eine passive Kühlung, oder für eine Kombination aus beidem vorgesehen sein. Im Falle der aktiven Kühlung wird somit ein künstlicher Luftstrom zu Kühlen erzeugt.

Dieser Ringgenerator ist als Innenläufer ausgebildet. Demnach läuft der Läufer innerhalb des Stators. Beispielsweise ist der Luftspalt zwischen Läufer und Stator im Wesentlichen als - kurzer - Zylindermantel ausgebildet. Hierunter würde auch eine Anordnung fallen, bei der der Luftspalt in axialer Richtung einen geringfügig abnehmenden oder zunehmenden Durchmesser aufweist und damit einem Kegelabschnitt gleicht. Insbesondere ist hierbei der Läufer als Ring in radialer Richtung innerhalb des ebenfalls ringförmigen Stators angeordnet. Der Stator ist als äußerer Ring fest angeordnet.

Vorzugsweise sind zumindest einige Kühlkanäle zur aktiven Kühlung durch einen forcierten Luftstrom vorbereitet und alternativ oder gleichzeitig sind einige Kühlkanäle zur passiven Kühlung durch den Wind vorbereitet. Insbesondere ist eine Vorrichtung vorgesehen, die einen Luftstrom erzeugt und die betreffenden Kühlkanäle zur aktiven Kühlung weisen eine Öffnung zum Ein- bzw. Ausströmen des betreffenden Luftstroms auf. Bevorzugt können einige Kühlkanäle zur aktiven und andere zur passiven Kühlung vorbereitet sein. Erfindungsgemäß wird gemäß Anspruch 1 ein Ringgenerator mit einer mit dem Stator verbundenen Statorglocke vorgeschlagen zum Schaffen eines Druckraums mit einem Über- oder Unterdruck zum Bereitstellen eines aktiven Luftstroms durch den und/oder entlang dem Stator und/oder Läufer zum Kühlen des Ringgenerators. Eine solche Statorglocke schließt somit einen Bereich benachbart zum Ringgenerator und daran angrenzend ein, in dem ein Überdruck aus Luft erzeugt wird und diese Luft durch Abschnitte in dem Ringgenerator, insbesondere durch Kühlkanäle im Statorring und/oder durch den Luftspalt entweichen kann, so dass ein kühlender Luftstrom entsteht. Die Statorglocke weist einen umlaufenden, insbesondere kreisförmigen Befestigungsabschnitt auf, zum Befestigen an dem Stator, insbesondere an dem Statorring. Ansonsten kommt es im Grunde nicht auf die genaue Form der Statorglocke an.

Gemäß einer Ausgestaltung weist der Statorring bezogen auf die Drehachse einen inneren Ringabschnitt zum aktiven Kühlen und einen äußeren Ringabschnitt zum passiven Kühlen auf und die Statorglocke ist so an dem Statorring befestigt, dass nur der innere Ringabschnitt vom aktiven Kühlluftstrom angeströmt wird. Insbesondere ist die Statorglocke bezogen auf die radiale Richtung in einem kreisförmigen Befestigungsabschnitt zwischen dem inneren und dem äußeren Ringabschnitt befestigt. Der innere Ringabschnitt ist somit im Wesentlichen innerhalb der Statorglocke und damit dem Druckraum der Statorglocke ausgesetzt, wohingegen der äußere Ringabschnitt außerhalb der Statorglocke angeordnet ist. Ein durch den Druckraum in der Statorglocke erzeugter Luftstrom erreicht somit nur den innen Ringabschnitt.

Im Übrigen ist darauf hinzuweisen, dass grundsätzlich auch in der Statorglocke ein Luftunterdruck erzeugt werden kann, um Luft durch Öffnungen im Ringgenerator zur Statorglocke hin einzusaugen.

Vorzugsweise ist die Statorglocke dazu vorbereitet, den Statorring zu tragen, der wiederrum das Blechpaket mit den Statorwicklungen trägt. Hierbei kann die Statorglocke an dem Statorring und an einem Maschinenträger in der Windenergieanlage befestigt sein. Der Statorring wäre in diesem Fall über die Statorglocke an dem Maschinenträger befestigt. Im Übrigen ist die Statorglocke aber nicht auf eine glockenförmige Ausbildung beschränkt, sondern kann auch eine allgemeine Haubenform oder dergleichen annehmen.

Gemäß einer weiteren Ausgestaltung ist in der Statorglocke wenigstens eine Gebläseöffnung mit einem Gebläse vorgesehen. Durch ein solches Gebläse kann Luft in den Druckraum geblasen werden, um eine Luftströmung durch den und/oder entlang dem Stator und/oder Läufer zum Kühlen des Ringgenerators zu erzeugen. Alternativ kann ein solches Gebläse auch für einen Luftunterdruck im Druckraum sorgen, um eine entgegengesetzte Luftströmung zu erzeugen. Ebenso können zwei oder mehr Gebläse in der Statorglocke vorgesehen sein.

Vorzugsweise verlaufen einige oder alle Kühlkanäle axial zur Drehachse. Somit ist der Ringgenerator zumindest teilweise für kühlende Luftströmungen in axialer Richtung vorbereitet.

Vorzugsweise ist eine Vielzahl von Kühlkanälen konzentrisch um die Drehachse angeordnet und bildet wenigstens einen ringförmigen Kühlbereich.

Gemäß einer weiteren Ausführungsform ist der Ringgenerator dadurch gekennzeichnet, dass der Statorring, bezogen auf die Drehachse in radialer Richtung einen inneren und einen äußeren und optional einen mittleren, stabilisierenden Tragring aufweist, wobei zwischen zwei Tragringen ein kreisförmiger Kühlbereich ausgebildet ist. Der Statorring ist somit in stabilisierende und kühlende Bereiche aufgeteilt. Zumindest sind zwei Tragringe ausgebildet, zwischen denen ein - im Grunde auch ringförmiger - Kühlbereich ausgebildet ist. Bei Verwendung eines mittleren Tragrings können auch zwei ringförmige Kühlbereiche vorgesehen sein, nämlich einer zwischen dem mittleren und äußeren Tragring oder der andere zwischen dem mittleren und inneren Tragring. Die Tragringe sind jeweils im Wesentlichen massiv ausgebildet. An dem inneren Tragring sind auch das Blechpaket oder andere magnetisch gut leitende Bereiche befestigt.

Die genannten zwei oder drei Tragringe sind dabei bevorzugt und insbesondere zusammen mit den dazwischen angeordneten Kühlbereichen aus einem Stück gefertigt, wie beispielsweise gegossen. Die Tragringe, die auch als Tragringabschnitte bezeichnet werden könnten, sollen im Wesentlichen für eine Versteifung des Statorrings sorgen. Bei Verwendung des mittleren stabilisierenden Tragrings ist die Statorglocke günstigerweise an dem mittleren, stabilisierenden Tragring befestigt, wodurch der Statorring von der Statorglocke getragen werden kann. Die Statorglocke greift hierbei zum Tragen am Statorring an dem mittleren Tragring an.

Durch die Verwendung von drei Tragringen und insgesamt zwei dazwischen angeordneten ringförmigen Kühlbereichen werden unterschiedliche Kühlstufen und Temperaturbereiche geschaffen. Ein innerer ringförmiger Kühlbereich ist näher am Blechpaket und damit der Wärmequelle und wird entsprechend höhere Temperaturen aufweisen als der entsprechende äußere ringförmige Kühlbereich. Etwaige Spannungen die durch die hohe Temperatur im inneren ringförmigen Kühlbereich auftreten können, können durch den äußeren ringförmigen Kühlbereich aufgenommen werden. Dementsprechend wäre bei dem inneren ringförmigen Kühlbereich mit viel Wärme und einer relativ großen Ausdehnung zu rechnen, wohingegen beim äußeren ringförmigen Kühlbereich mit wenig Wärme und entsprechen geringerer Ausdehnung zu rechnen ist. Der äußere ringförmige Bereich hält hierbei den inneren ringförmigen Bereich und begrenzt gegebenenfalls dessen Ausdehnung.

Gemäß einer Ausgestaltung wird vorgeschlagen, dass benachbarten Kühlkanäle eines Kühlbereichs durch Begrenzungswände gegeneinander abgegrenzt sind und die Begrenzungswände Verbindungsstege zwischen zwei benachbarten stabilisierenden Tragringen bilden und/oder zwei benachbarte Tragringe durch Kühlrippen miteinander verbunden sind. Hierdurch ergibt sich zwischen zwei benachbarten stabilisierenden Tragringen eine Konstruktion, die einerseits die betreffenden Tragringe verbinden und gleichzeitig Kühlkanäle einteilen. Solche Verbindungskonstruktionen oder Verbindungsstege können gleichzeitig die Funktion von Kühlrippen erfüllen. Diese inneren Kühlrippen können im Grunde beliebig geformt sein. Neben einer geraden Ausführung kommen aus S-förmige, geschwungene und weitere Formen in Betracht.

Günstig ist es, wenn wenigstens einer, vorzugsweise alle Kühlkanäle wenigstens eines Kühlbereichs im axialen Querschnitt eine Dreiecksform aufweisen und/oder jeweils zwei benachbarte Kühlkanäle zusammen im axialen Querschnitt die Form eines Parallelogramms, insbesondere einer Raute bilden, und/oder die Kühlkanäle wenigstens eine zur Kühlkanalinnenseite weisende Kühlrippe aufweisen. Durch eine solche Dreiecksform ergibt sich eine einfache und gleichzeitig stabile Ausgestaltungsmöglichkeit. Das gleiche gilt für die Rautenform zweier Kühlkanäle, die sich insbesondere durch entsprechendes Zusammensetzen zweier drecksförmiger Kühlkanäle ergibt. Durch das Vorsehen von Kühlrippen in der Kühlkanalinnenseite kann eine Kühlung durch einen Luftstrom durch den betreffenden Kühlkanal begünstigt werden.

Gemäß einer weiteren Ausführungsform wird vorgeschlagen, däss der Statorring segmentiert ist, insbesondere aus zwei, drei, vier oder mehr im Wesentlichen symmetrischen Kreissegmenten zusammengesetzt ist. Beispielsweise kann der Statorring aus drei 120°-Segmenten zusammengesetzt sein. Solche Segmente sind grundsätzlich einfacher in der Herstellung und/oder beim Transport. Insbesondere bei Statorringen mit einem Durchmesser in Bereich von 10 m kann durch eine Segmentierung eine Handhabbarkeit erheblich vereinfacht werden.

Gemäß einer Ausführungsform wird vorgeschlagen, dass der Statorring zumindest im Bereich der Kühlkanäle aus Aluminium und/oder einer Aluminiumlegierung gefertigt ist und/oder aus einem Material gegossen ist. Aluminium weist eine hohe Temperaturleitfähigkeit auf und wird daher vorzugsweise im Bereich der Kühlkanäle und somit in Kühlbereichen vorgesehen. Außerdem ist Aluminium grundsätzlich korrosionsbeständig und kann somit auch für einen Kontakt mit feuchter Außenluft oder dergleichen vorgesehen sein. Eine Legierung kann verwendet werden, um Eigenschaften des Materials insbesondere in Bezug auf Wärmeleitfähigkeit, Korrosionsbeständigkeit und Stabilität zu beeinflussen.

Der Statorring, oder ein Bereich davon wird vorzugsweise aus einem Material gegossen. Hierdurch sollen spezielle Kanalausgestaltungen und andere Formen leicht und reproduzierbar erstellt werden. Zumindest im Bereich der Kühlkanäle und/oder der oder einiger Tragringe kann das Gießen des betreffenden Abschnitts vorgesehen sein. Auch eine Segmentierung kann vorgenommen werden, indem beispielsweise einzelne Segmente wie 90 °- oder 120 °-Segmente gegossen werden.

Eine weitere Ausführungsform schlägt vor, dass passive Kühlkanäle vorgesehen sind mit jeweils einer in axiale Richtung weisenden Einströmöffnung und einer zumindest teilweise radial nach außen weisenden Ausströmöffnung. Solche passiven Kühlkanäle können somit in axialer Richtung beispielsweise von Wind angeströmt werden, wodurch der Wind in die Einströmöffnungen einströmt und zumindest teilweise radial nach außen gewandt aus den passiven Kühlkanälen wieder ausströmt. Durch die radial nach außen weisenden Ausströmöffnungen kann ein Sogeffekt erreicht werden. Dadurch, dass die passiven Kühlkanäle eine Ein- und eine Ausströmöffnung aufweisen und damit als teilweise geschlossene Kanäle ausgebildet sind, kann eine Erhöhung der Stabilität des Statorrings erreicht werden. Grundsätzlich können die Ausströmöffnungen auch in axiale Richtung weisen.

Vorzugsweise ist die Ausströmöffnung somit als Saugöffnung vorgesehen. Vorzugsweise kann dieser Effekt noch begünstigt oder verstärkt werden, indem der Statorring in axialer Richtung im Bereich der Ausströmöffnung eine gewölbte Oberfläche aufweist. Durch eine konvexe Wölbung kann ähnlich einer Flugzeugtragfläche ein Saugeffekt entstehen, der somit auf die Austrittsöffnung wirken und die Luftströmung durch den passiven Kühlkanal erhöhen könnte.

Erfindungsgemäß wird somit ein Ringgenerator einer Windenergieanlage gemäß Anspruch 1 vorgeschlagen. Demnach weist der Ringgenerator einen Statorring zum Aufnehmen von Statorwicklungen und einen relativ zum Stator drehbar gelagerten Läufer auf. Weiterhin ist eine mit dem Statorring verbundene Statorglocke vorgesehen, die einem Druckraum mit einem Über- oder Unterdruck zum Bereitstellen eines Luftstroms durch den Stator und/oder Läufer zum Kühlen des Ringgenerators schafft, wobei die Statorglocke wenigstens eine mit dem Gebläse versehende Gebläseöffnung aufweist und das Gebläse mittels einer Bewegungsmechanik beweglich gelagert ist oder durch eine Schnellspannvorrichtung befestigt ist, um die Gebläseöffnung zu Wartungszwecken und/oder zum Passieren für eine Person temporär zu öffnen. Die Statorglocke ist somit an dem Statorring befestigt und durch das wenigstens eine Gebläse wird in der Statorglocke benachbart zur Statorläuferanordnung ein Überdruck erzeugt, der als Luftkühlstrom bzw. Luftkühlströme durch Öffnungen in der Läuferstatoranordnung, wie beispielsweise durch den Luftspalt, entweicht. Um nun das Vorsehen einer außerordentlichen Öffnung in der Statorglocke zu vermeiden und gleichwohl einen Zugang zur Rotor-Statoranordnung zu schaffen, wird zumindest ein Gebläse mittels einer Bewegungsmechanik beweglich gelagert. Dieses Gebläse kann somit weggeklappt, weggeschwenkt, weggeschoben, weggedreht oder anderweitig bewegt werden, so dass die entsprechende Gebläseöffnung in der Statorglocke frei wird und hierdurch für Wartungszwecke und/oder zum Passieren für eine Person frei wird. Das betreffende Gebläse und etwaige weitere Gebläse werden für solche Wartungszwecke natürlich ausgeschaltet.

Vorzugsweise ist die Bewegungsmechanik als Schwenkmechanismus ausgebildet. Das Gebläse kann somit auf einfache Weise von ihrer Gebläseöffnung weggeschwenkt werden und braucht nur jeweils in der geöffneten oder geschlossenen Position arretiert zu werden.

Gemäß einer Ausführungsform ist der Ringgenerator dadurch gekennzeichnet, dass die Statorglocke einen ersten Befestigungsabschnitt zum Befestigen mit einem Maschinenträger einer Windenergieanlage aufweist und mehrere, sich davon in einer sternförmigen Anordnung nach außen zu einem zweiten Befestigungsabschnitt zum Befestigen mit dem Statorring erstreckenden Tragabschnitte, insbesondere Tragarme aufweist, so dass der Statorring über die Tragabschnitte an dem Maschinenträger getragen werden kann. Bezogen auf eine radiale Richtung ist der erste Befestigungsabschnitt somit ein innen angeordneter Abschnitt und der zweite Befestigungsabschnitt ein äußerer Befestigungsabschnitt. Die Tragabschnitte, insbesondere Tragarme erstrecken sich sternförmig vom inneren zum äußeren Tragabschnitt und spannen dadurch im Wesentlichen die Statorglocke auf. Zwischen den Tragabschnitten bzw. Tragarmen sind Abdeckabschnitte wie Verbindungsbereiche vorgesehen, um die Statorglocke zu schließen. Insbesondere in diesen Verbindungsbereichen können Gebläseöffnungen mit Gebläsen vorgesehen sein. Zwar stabilisieren auch die Zwischenbereiche, gleichwohl übernehmen die Tragabschnitte bzw. Tragarme im Wesentlichen das Halten des Statorrings. Die Statorglocke kann somit zwei Funktionen zugleich erfüllen, nämlich den Statorring zu tragen und gleichzeitig einen Druckraum mit einem Über- oder Unterdruck zum Bereitstellen eines Luftstroms abzugrenzen. Durch die Zwischenbereiche kann insbesondere eine erhöhte Torsionssteifigkeit erreicht werden.

Vorzugsweise wird die Statorglocke aus einem Stück gegossen, vorzugsweise aus einem Metall, insbesondere Gusseisen, bevorzugt aus Gusseisen mit Kugelgraphit, das auch als Sphäroguss bekannt ist bzw. als GJS oder früher als GGG - was globularer Grauguss bedeutet - abgekürzt wird. Hierdurch können eine Vielzahl von Formen erreicht und durch Wiederverwendung der entsprechenden Form mehrfach hergestellt werden. Der bevorzugte Werkstoff weist gute mechanische Eigenschaften auf, ist kostengünstig herstellbar und gut bearbeitbar.

Ein Ringgenerator kann im Grunde jedes der beschriebenen Merkmale aufweisen und jegliche Merkmalskombinationen sind grundsätzlich möglich. Insbesondere kann ein Ringgenerator mit einer Statorglocke mit einem beweglich gelagerten Gebläse kombiniert werden mit Merkmalen eines Ringgenerators, der einen Statorring mit Kühlkanälen zum Kühlen des Stators durch wenigstens einen Luftstrom aufweist. Ebenso ist der umgekehrte Fall möglich, dass ein Ringgenerator mit einem Statorring mit Kühlkanälen mit Merkmalen eines Ringgenerators mit einer Statorglocke mit einem beweglich gelagerten Gebläse kombiniert werden kann. Diese Kombinationsmöglichkeit betrifft auch die weiteren gemäß einer oder mehreren Ausführungsformen beschriebenen Merkmale.

Vorzugsweise hat der Ringgenerator eine Nennleistung von wenigstens 30 kW, vorzugsweise wenigstens 300 kW und noch weiter bevorzugt wenigstens 1 MW. Der Ringgenerator ist somit von der Nennleistung her geeignet, für moderne Windenergieanlagen eingesetzt zu werden.

Erfindungsgemäß wird ein Verfahren zum Steuern einer Windenergieanlage gemäß Anspruch 7 vorgeschlagen. Eine solche zu steuernde Windenergieanlage weist einen Ringgenerator mit einem Läufer und einem Stator auf. Es wird zunächst eine durch den Ringgenerator erzeugte elektrische Leistung erfasst. Diese Erfassung kann durch eine direkte Leistungsmessung beispielsweise an den Statorwicklungen erfolgen oder es kann eine indirekte Messung über charakteristische Messwerte vorgenommen werden wie beispielsweise die Messung der Drehzahl und/oder der Anstellwinkel der Rotorblätter und/oder interner Rechengrößen, die ein Steuercomputer ohnehin zur Verfügung hat.

Auch eine Temperaturmessung kann Aufschluss über die erzeugte elektrische Leistung geben.

Als nächstes wird wenigstens ein in einer Statorglocke eingebautes Gebläse eingeschaltet, um einen Luftstrom durch den und/oder entlang dem Stator und/oder Läufer zum Kühlen des Ringgenerators zu erzeugen, wenn die erfasste elektrische Leistung einen vorbestimmten Wert erreicht und/oder überschreitet. Somit wird eine aktive Kühlung, die zusätzliche Energie benötigt, nur dann eingesetzt, wenn aufgrund der erzeugten elektrischen Leistung entsprechende Verlustleistungen und somit entsprechende thermische Belastungen zu erwarten sind. Es ist zu beachten, dass die Steuerung der Windenergieanlage ansonsten in dem Fachmann bekannter Art und Weise erfolgt.

Vorzugsweise wird als vorbestimmter Wert ein Wert von oder oberhalb von 30 %, vorzugsweise 50 % und weiter bevorzugt 80 % der Nennleistung der Windenergieanlage festgelegt. Insbesondere wird die Nennleistung selbst als der vorbestimmte Wert gewählt. Demnach wird die aktive Kühlung erst bei Volllast oder kurz davor eingeschaltet und bei Teillast gegebenenfalls nicht aktiv gefühlt.

Vorzugsweise wird das erfindungsgemäße Steuerverfahren für einen der erfindungsgemäßen Ringgeneratoren und/oder für einen Ringgenerator gemäß wenigstens einer der beschriebenen Ausführungsformen eingesetzt.

Erfindungsgemäß wird außerdem eine Windenergieanlage mit einer Gondel und einem der erfindungsgemäßen Ringgeneratoren insbesondere gemäß einer der beschriebenen Ausführungsformen vorgeschlagen.

Vorzugsweise ist eine Windenergieanlage dadurch gekennzeichnet, dass der Ringgenerator bis auf einen äußeren Abschnitt des Statorrings innerhalb der Gondel angeordnet ist und der äußere Abschnitt des Statorrings außerhalb der Gondel angeordnet ist, um von Wind angeströmt zu werden. Die Gondel beinhaltet auch die Nabenverkleidung, die sich im Betrieb der Windenergieanlage mit dem Rotor dreht. Die Nabenverkleidung wird auch als Spinner bezeichnet. Somit ist der Ringgenerator im Wesentlichen in der Gondel und damit vor Witterungseinflüssen geschützt. Eine Kühlung des Ringgenerators kann bereits passiv oder aktiv innerhalb der Gondel beispielsweise durch Kühlkanäle und/oder durch Verwendung einer entsprechenden Statorglocke erreicht werden. Zusätzlich wird vorgeschlagen, dass ein äußerer Abschnitt des Statorrings insbesondere mit einem passiven Kühlbereich außerhalb der Gondel angeordnet ist. Insbesondere ergibt sich ein etwas über die Gondelverkleidung überstehender Ringabschnitt, der zum Kühlen von Wind angeströmt werden kann. Das besondere hierbei ist auch, dass das Umströmen der Gondel durch den Wind unmittelbar zum Kühlen des Generators eingesetzt werden kann. Dabei hängt der Kühleffekt zumindest teilweise von der vorherrschenden Windgeschwindigkeit ab. Eine hohe Kühlung wird somit im Volllastbereich bei starkem Wind erreicht, wohingegen im Teillastbereich und damit bei schwachem Wind eine geringere Kühlung erreicht wird und damit die Kühlung automatisch zumindest teilweise bedarfsgerecht angepasst ist.

Ein äußerer Abschnitt des Statorrings weist vorzugsweise Kühlmittel auf, insbesondere Kühlkanäle zur passiven Kühlung, wobei diese Kühlmittel unmittelbar dem Wind ausgesetzt sind. Der Ringgenerator kann somit in diesem äußeren Abschnitt unmittelbar Wärme in den Wind abgeben, von dem er angeströmt wird. Es wird darauf hingewiesen, dass eine solche Situation sich generell auf eine im Betrieb befindliche Windenergieanlage bezieht, die in den Wind gedreht ist.

Vorzugsweise ist die Gondel aerodynamisch ausgebildet, um im Wesentlichen laminar vom Wind - sofern sie in den Wind gedreht ist - angeströmt zu werden, um auch Wind im Bereich eines äußeren Abschnitts des Statorrings zu haben. Eine solche aerodynamische Ausgestaltung kann beispielsweise durch eine im Wesentlichen etwa tropfenförmige, eiförmige und/oder in einer Seitenansicht ovale Form und/oder durch eine im Wesentlichen bezogen auf die Rotorachse rotationssymmetrischer Form erreicht werden.

Günstig ist es, Strömungsmittel außerhalb der Gondel vorzusehen, die eine Windströmung im Bereich des äußeren Abschnitts des Statorrings begünstigt. Beispielsweise kann ein Leitblech zum Leiten des Windes oder die Ausformung eines windkanalähnlichen Strömungsmittels vorgesehen sein.

Nachfolgend wird die Erfindung anhand von Ausführungsbeispielen unter Bezugnahme auf die begleitenden Fig. näher erläutert. Etwaige Richtungsangaben sind bezogen auf die Windrichtung bei bestimmungsgemäßem Betrieb. So bedeutet "von vorne" aus Sicht des anströmenden Windes usw.
- Fig. 1: zeigt einen Statorring einer Windenergieanlage in einer Ansicht von vorne.
- Fig. 2: zeigt den Statorring der Fig. 1 in einer Ansicht von hinten.
- Fig. 3: zeigt den Statorring der Fig. 1 gemäß einer Ansicht von rechts in einer teilgeschnittenen Darstellung.
- Fig. 4: zeigt einen Ausschnitt X der Fig. 2.
- Fig. 5: zeigt einen Ausschnitt Y der Fig. 4.
- Fig. 6: zeigt einen Ausschnitt gemäß U der Fig. 4.
- Fig. 7: zeigt einen Schnitt durch den Statorring gemäß dem Schnitt AA der Fig. 4.
- Fig. 8: zeigt den Ausschnitt gemäß Fig. 4 in einer perspektivischen Darstellung.
- Fig. 9: zeigt einen Ausschnitt gemäß Z der Fig. 1.
- Fig. 10: zeigt einen Schnitt durch zwei Kühlkanäle mit einer Schnittansicht gemäß Schnitt BB der Fig. 9.
- Fig. 11: zeigt den Ausschnitt gemäß Fig. 9 in einer perspektivischen Darstellung.
- Fig. 12: zeigt einen Ausschnitt einer Draufsicht von oben auf den Statorring gemäß Fig. 1 wie in Fig. 1 durch CC angedeutet.
- Fig. 13: zeigt eine Statorglocke als Statorglocke in einer perspektivischen Darstellung, bezogen auf einen Druckraum, von außen.
- Fig. 14: zeigt die Statorglocke der Fig. 13 in einer weiteren perspektivischen Ansicht.
- Fig. 15: zeigt die Statorglocke der Fig. 13 und 14 in einer seitlichen Schnittansicht.
- Fig. 16: zeigt eine an einem Statorring befestigte Statorglocke mit eingesetzten Gebläsen.
- Fig. 17: zeigt eine an einem Statorring befestigte Statorglocke mit 4 Gebläsen, von denen eines aus seiner Gebläseöffnung teilweise weggeklappt ist.
- Fig. 18: zeigt schematisch und im Ausschnitt einen in einer Gondel und Spinner angeordneten Ringgenerator in einer seitlichen Schnittansicht.
- Fig. 19 bis 22: zeigen die Gondel einer Windenergieanlage gemäß einer Ausführungsform in unterschiedlichen Perspektiven jeweils in einer schematischen Darstellung.

Es ist zu beachten, dass gleiche Bezugszeichen eventuell ähnliche, nicht identische Elemente auch unterschiedlicher Ausführungsformen bezeichnen können.

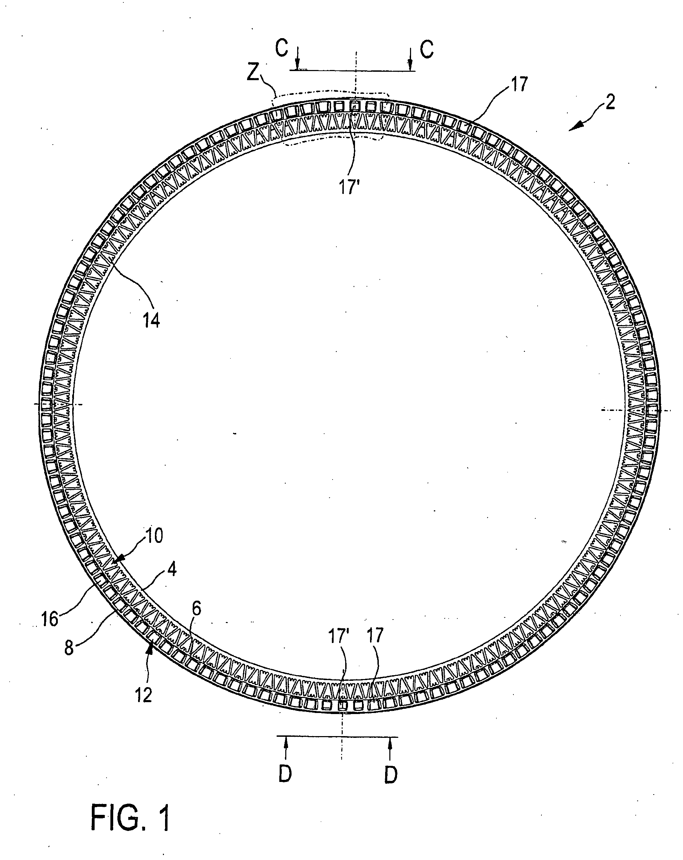

Der Statorring 2 gemäß Fig. 1 ist ringförmig ausgestaltet und bildet einen Teil eines Ringgenerators mit Innenläufer. Der Statorring 2 weist einen inneren Tragring 4, einen mittleren Tragring 6 und einen äußeren Tragring 8 auf. Zwischen dem inneren und äußeren Tragring 4, 6 ist ein aktivier Kühlabschnitt 10 vorgesehen und zwischen dem mittleren und dem äußeren Tragring 6, 8 ist ein passiver Kühlabschnitt 12 vorhanden. Der Statorring 2 wie dargestellt ist, einschließlich innerer, mittlerer und äußerer Tragring 4, 6, 8 und aktivem und passivem Kühlabschnitt 10, 12, aus einem Stück gegossen, wobei als Material Aluminium verwendet wird.

Der innere, mittlere und äußere Tragring 4, 6, 8 sorgen durch ihre im Wesentlichen massive Ausbildung für eine Stabilität und Steifigkeit. Zum Führen eines Magnetfeldes ist ein entsprechendes, Statorwicklungen tragendes und magnetisch gut leitfähiges Blechpaket innen an dem inneren Tragring 4 anzuordnen. Durch seine Befestigung am inneren Tragring 4 kann das Blechpaket fest getragen werden. Innerhalb dieses Blechpakets ist dann bestimmungsgemäß ein Innenläufer relativ zum Stator drehbar gelagert anzuordnen. Wärme vom Blechpaket kann unmittelbar an die umgebende Luft abgegeben werden, wird hauptsächlich aber über den Tragring 4 Wärme an den aktiven Kühlabschnitt 10 und den passiven Kühlabschnitt 12 abgeben. Der aktive Kühlabschnitt weist dann zum Abgeben von Wärme eine Vielzahl von aktiven Kühlkanälen 14 auf, die im aktiven Kühlabschnitt 10 zwischen dem inneren und mittleren Tragring 4, 6 im Wesentlichen dreiecksförmig ausgebildet sind. Weitere Wärme kann über die im Querschnitt etwa quadratisch oder trapezförmigen passiven Kühlkanäle 16 abgegeben werden.

Der Statorring 2 weist etwa einen Außendurchmesser von 5 m auf. Die axiale Ausdehnung beträgt etwa 90 cm.

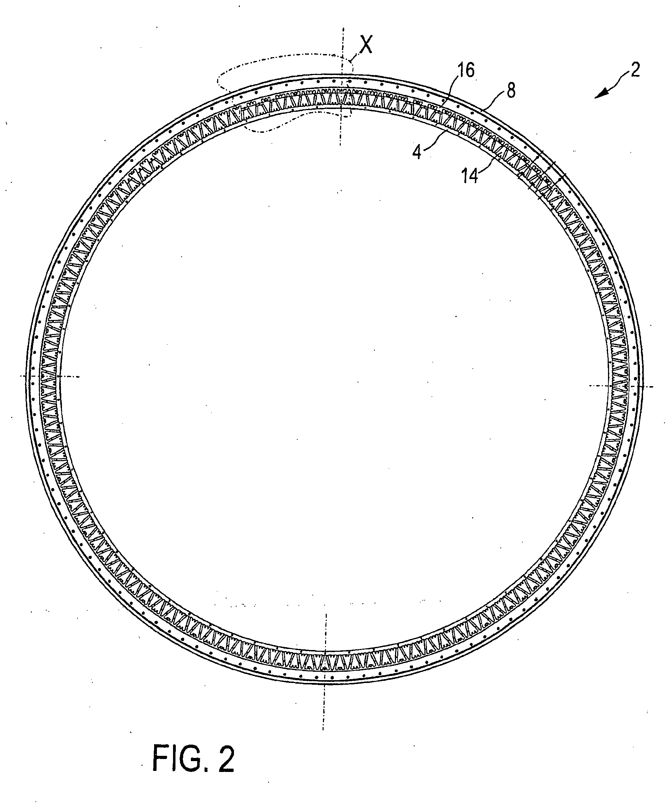

Die passiven Kühlkanäle 16 weisen eine radial nach außen gerichtete Ausströmöffnung jeweils auf, so dass in der Rückansicht gemäß Fig. 2 nur die aktiven Kühlkanäle 14 zu erkennen sind.

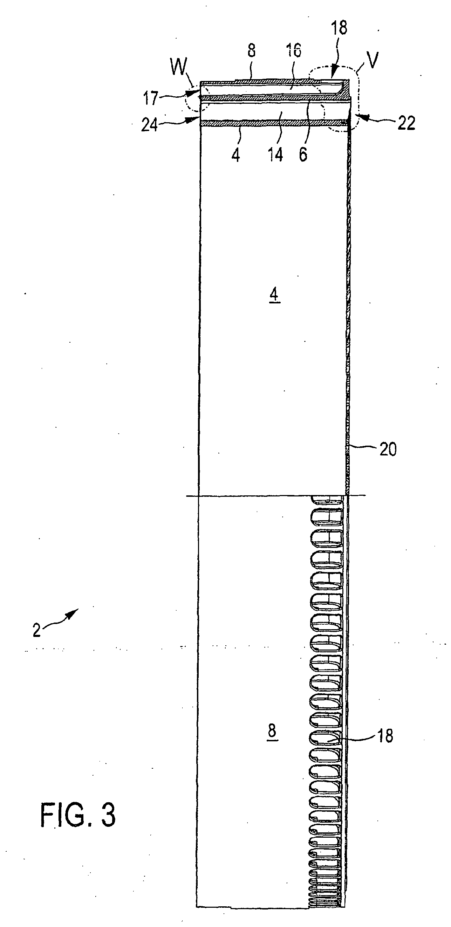

Aus der Seitenansicht der Fig. 3 gemäß dem ungeschnittenen dargestellten Abschnitt, der in der Fig. 3 unten dargestellt ist, sind radial nach außen gerichtete Ausströmöffnungen 18 zu erkennen. Der geschnittene Bereich lässt neben einem angeschrägten Rand 20 des inneren Tragrings 4 die Form der aktiven und passiven Kühlkanäle 14, 16 in einem axialen Schnitt erkennen. Dabei verlaufen die aktiven Kühlkanäle im Wesentlichen axial von einem Einlassbereich 22 zu einem Auslassbereich 24. Der passive Kühlkanal 14 verläuft von einer Einströmöffnung 17 zu der Ausströmöffnung 18. Auch der passive Kühlkanal 16 verläuft im Wesentlichen in axialer Richtung, wobei die Ausströmöffnung radial nach außen gerichtet ist. Zudem befindet sich der Einlassbereich 22 des aktiven Kühlkanals 14 auf der zur Einströmöffnung 17 des passiven Kühlkanals 16 gegenüberliegenden Seite des Statorrings 2. Entsprechend ist auch der Statorring 2 dazu vorbereitet, dass eine aktive Luftströmung durch die aktiven Kühlkanäle 14 im Wesentlichen einer passiven Luftströmung durch die passiven Kühlkanäle 16 entgegen gerichtet ist.

Gleichwohl sind diese Strömungsrichtungen nicht zwingend und zumindest durch die aktiven Kühlkanäle könnte durch entsprechende Einrichtungen auch eine Luftströmung in anderer als oben beschriebener Richtung geführt werden.

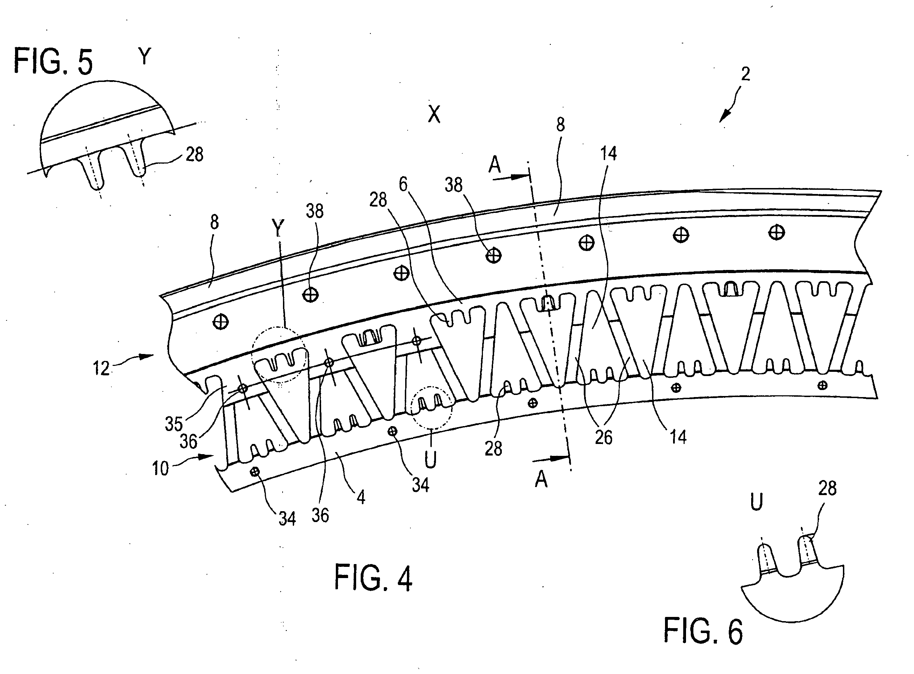

Aus dem vergrößerten Abschnitt gemäß Fig. 4 ist insbesondere der Querschnitt der aktiven Kühlkanäle 14 bzw. jeweils ihr Einlassbereich 22 erkennbar. Die aktiven Kühlkanäle 14 sind dabei im Wesentlichen dreiecksförmig im Querschnitt ausgebildet, wobei sie abwechselnd mit unterschiedlicher Ausrichtung angeordnet sind, so dass zwei benachbarte aktive Kühlkanäle 14 zusammen im Querschnitt etwa die Form eines Parallelogramms annehmen. Entsprechend ist jeweils eine Begrenzungswand zwischen zwei aktiven Kühlkanälen angeordnet, wobei immer zwei Begrenzungswände 26 eines aktiven Kühlkanals 14 gegeneinander geneigt sind.

Die Begrenzungswände 26 unterteilen somit die aktiven Kühlkanäle 14 gegeneinander und dienen somit gleichzeitig als Kühlrippen. Außerdem führen sie zu einer stabilen Anordnung, insbesondere stabilen Verbindung des inneren Tragrings 4 mit dem mittleren Tragring 6 aufgrund der wechselseitig geneigten Anordnung.

In den aktiven Kühlkanälen 14 sind zudem zusätzliche, stegartig geformte Kühlmittel bzw. Kühlrippen 28 vorgesehen, die in Fig. 5 bzw. Fig. 6 vergrößert dargestellt sind.

Die Kühlrippen 28 erhöhen somit die Kühloberfläche in dem aktiven Kühlkanal 14, ohne einen Luftstrom nennenswert zu behindern.

Zu Befestigungszwecken sind an dem inneren Tragring 4 Innentragringbohrungen 34 vorgesehen. Entsprechend sind im Bereich des mittleren Tragrings 6 mittlere Tragringbohrungen 36 vorgesehen und im Bereich des passiven Kühlabschnitts 12 benachbart zum äußeren Tragring 8 weist der Statorring 2 äußere Tragringsbohrungen 38 auf. Zumindest einige der Bohrungen 34, 36 und 38 sind mit einem Gewinde versehen und können zu Befestigungszwecken verwendet werden. Zur Befestigung des Statorrings 2 an einer Statorglocke dienen die äußeren Tragringbohrungen 38.

Die mittleren Tragringbohrungen 36 sind an einigen Stellen des Statorrings durch Hilfsflächen 35 vorgesehen, nämlich jeweils drei Bohrungen an vier Stellen. Sie dienen der Befestigung von Kabeln.

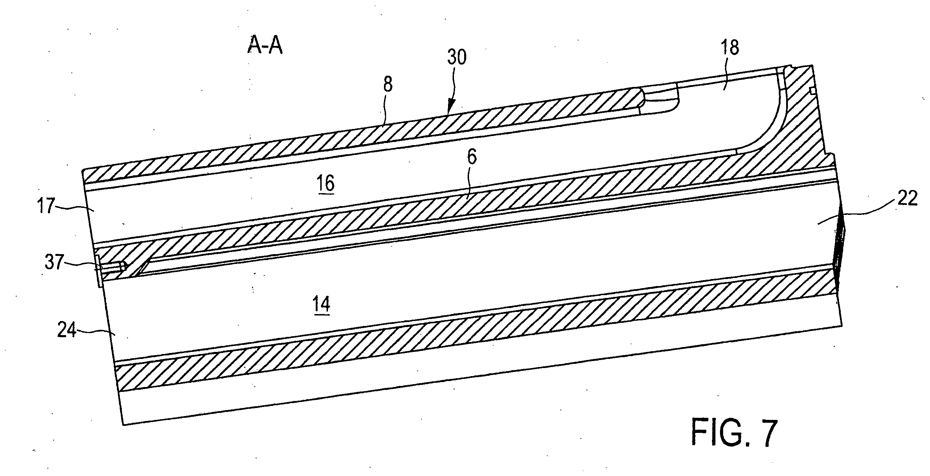

Fig. 7 zeigt in einem Querschnitt, wie ein passiver Kühlkanal 16 zwischen dem äußeren Tragring 8 und dem mittleren Tragring 6 angeordnet ist. Dabei erstreckt sich der passive Kühlkanal 16 von der Einströmöffnung 17 zur Ausströmöffnung 18. Eine Luftströmung kann somit im Wesentlichen in axialer Richtung durch die Einlassöffnung 17 einströmen und am Ende durch die radial nach außen gewandte Ausströmöffnung 18 ausströmen. Dabei ist eine dem passiven Kühlkanal 16 abgewandte Seite des äußeren Tragrings 8 eine Außenseite 30 des Statorrings 2. Bestimmungsgemäß strömt somit Luft entlang beider Seiten des äußeren Tragrings 8, nämlich innen durch den aktiven Kühlkanal 16 und außen entlang der Außenseite 30.

Zwischen dem mittleren Tragring 6 und dem inneren Tragring 4 ist der aktive Kühlkanal 14 ausgebildet. Er erstreckt sich von dem Einlassbereich 22 zum Auslassbereich 24. Der mittlere Tragring 6 weist zudem Sacklöcher 37 auf, die zum Befestigen einer Regenrinne dienen.

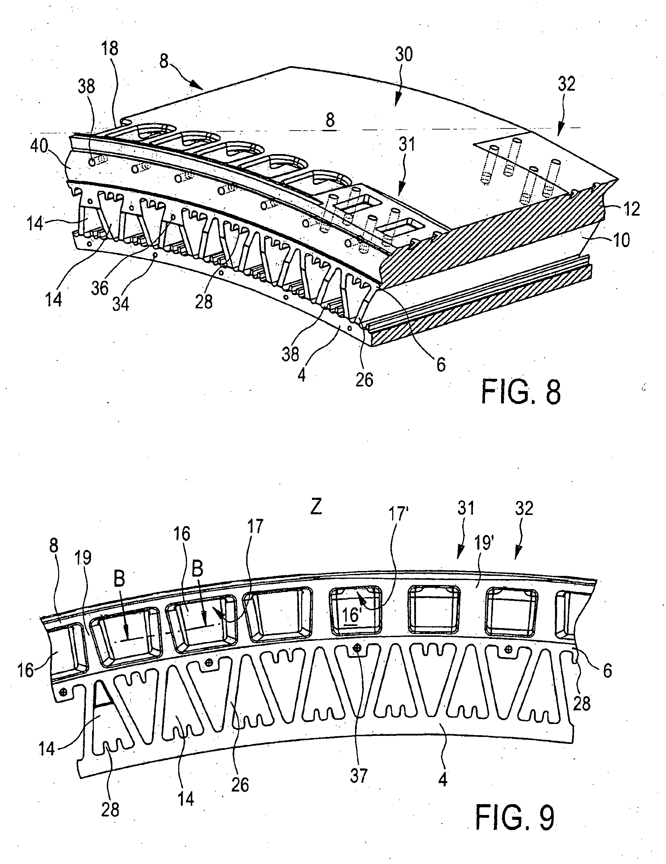

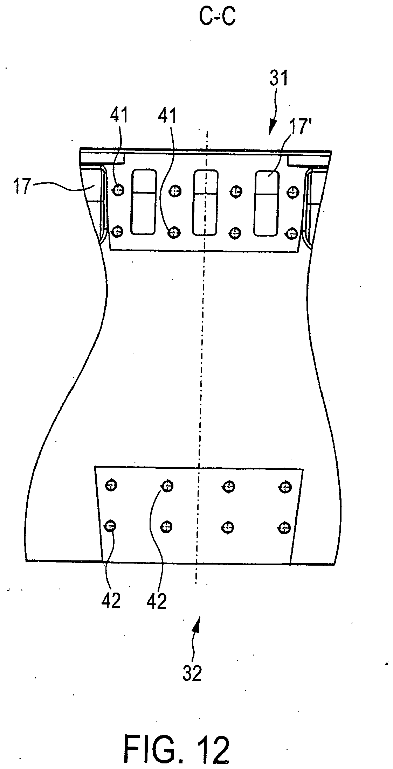

Die perspektivische Darstellung der Fig. 8 verdeutlicht lee- und luvseitige Außenbefestigungsbereiche 31 bzw. 32, die nur teilweise dargestellt sind und unten unter Bezugnahme auf Fig. 12 näher erläutert werden.

Zudem ist der Fig. 8 zu entnehmen, wie sich die passiven Kühlkanäle 16 durch ihre Ausströmöffnungen 18 zur Außenseite 30 hin öffnen. Dadurch, dass die Ausströmöffnungen 18 radial nach außen gerichtet sind, entsteht - aus bestimmungsgemäßer Windrichtung gesehen - hinter den passiven Kühlkanälen 16 ein Stirnabschnitt 40, in dem die äußeren Tragringsbohrungen 38 angeordnet sind.

Die Fig. 9 bietet eine Sicht unmittelbar auf die Einströmöffnungen 17 der passiven Kühlkanäle 16. Es ist, wie auch schon in Fig. 7, zu erkennen, dass sich die passiven Kühlkanäle 16 von der Einströmöffnung 17 aus leicht verjüngen. Das kann das Einströmen von Wind in die Einstömöffnungen 17 begünstigen. Im Bereich der Außenbefestigungsbereiche 31 bzw. 32 können die passiven Kühlkanäle als etwas kleinere passive Kühlkanäle 16' mit entsprechend verkleinerten Einströmöffnungen 17' ausgebildet sein, um etwas massivere Zwischenwände 19' für das Ausbringen von Bohrungen insbesondere mit Gewinde zu schaffen. Die Zwischenwände 19, die keine Bohrungen aufweisen, können etwas schmaler ausgestaltet sein, um dadurch mehr Platz für einen größeren passiven Kühlkanal 16 zu schaffen.

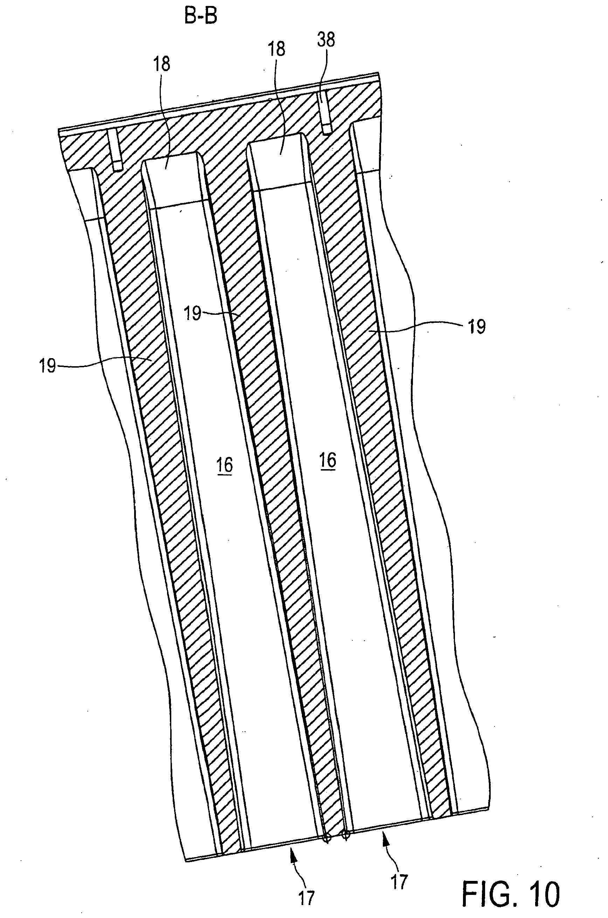

Die Schnittdarstellung gemäß Fig. 10 bietet eine Sicht auf aufgeschnittene passive Kühlkanäle 16. Hierbei wird auch nochmal das Verjüngen der passiven Kühlkanäle von der Einströmöffnung 17 zu den Ausströmöffnungen 18 verdeutlicht. Entsprechend nimmt die Stärke der Zwischenwände 18 in dieselbe Richtung zu.

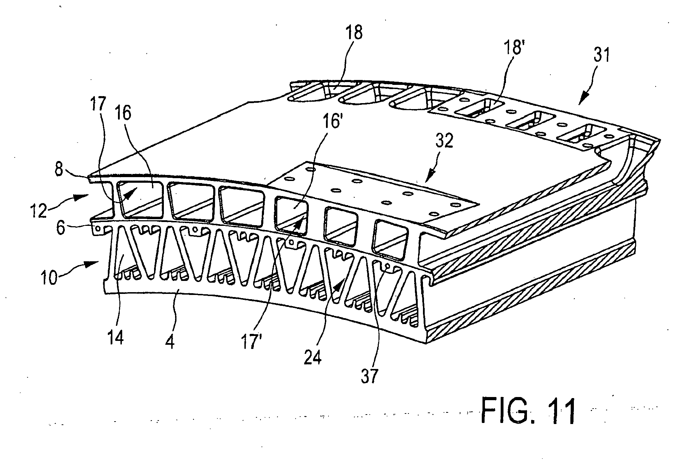

In der perspektivischen Darstellung des Ausschnitts gemäß Fig. 11 sind im Vordergrund die Auslassbereich 24 der aktiven Kühlkanäle 14 und außerdem die Einströmöffnungen 17 und 17' der passiven Kühlkanäle 16 bzw. 16' gezeigt. Der lee- und luvseitige Außenbefestigungsbereich 31 bzw. 32 ist am äußeren Tragring 38 im Bereich der etwas schmaler ausgestalteten passiven Kühlkanäle 16' angeordnet. Entsprechend sind kleinere Ausströmöffnungen 18' vorgesehen.

Die Außenbefestigungsbereiche 31 bzw. 32 sind jeweils an zwei sich gegenüber liegenden, also um 180° versetzt angeordneten Stellen am Statorring 2 vorgesehen wie dies in Fig. 1 an den 2 mal 3 etwas verkleinerten Einströmöffnungen 17' in 12-Uhr und 6-Uhr-Stellung zu erkennen ist. Eine Draufsicht der einen Stelle ist in der Fig. 12 gezeigt, demnach der leeseitige Außenbefestigungsbereich 31 acht leeseitige Bohrungen 41 aufweist, wohingegen der luvseitige Außenbefestigungsbereich 32 acht luvseitige Bohrungen 42 aufweist.

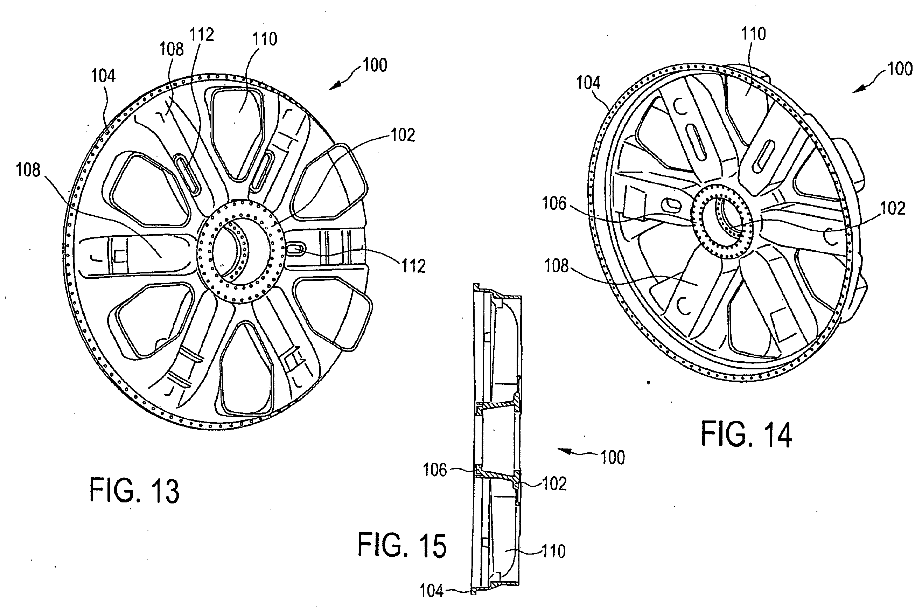

Die Statorglocke 100 der Fig. 13 bis 15 umfasst eine Maschinenträgerbefestigung 102, eine Statorringbefestigung 104 und eine Achszapfenbefestigung 106. Die Maschinenträgerbefestigung 102, die Statorringbefestigung 104 und die Achszapfenbefestigung 102 sind jeweils als kreisförmiger Befestigungsflansch mit jeweils einem oder zwei umlaufenden Lochkränzen ausgebildet.

Von der Maschinenträgerbefestigung 102 erstrecken sich sechs Tragabschnitte 108 etwa sternförmig zu der Statorringbefestigung 104. Die Tragabschnitte 108 sind als Tragarme 108 ausgestaltet, um die Gewichtskraft eines an der Statorringbefestigung 104 befestigten Stators aufnehmen und über die Maschinenträgerbefestigung 102 an einen Maschinenträger übertragen zu können.

Die Bereiche zwischen den Tragabschnitten 108 sind jeweils durch blechähnliche Abschnitte überspannt, wobei jeweils Gebläseöffnungen 110 darin vorgesehen sind. In einigen Tragabschnitten 108 sind zudem Hilfsöffnungen 112 ausgebildet.

Außerdem ist im Bereich der Achszapfenbefestigung 106 eine Öffnung vorhanden, die durch eine bestimmungsgemäße Befestigung eines Achszapfens allerdings verschlossen wird.

Durch Verschließen der Gebläseöffnungen 110, insbesondere durch Gebläse, und die Hilfsöffnungen 112 kann somit die gesamte Statorglocke 100 geschlossen werden. Durch Befestigen eines Stators an der Statorringbefestigung 104 und das Vorsehen eines entsprechenden Läufers, kann zwischen diesem Stator und Läufer einerseits und der Statorglocke 100 andererseits ein Druckraum gebildet und mit Druck beaufschlagt werden. Die Luft kann dann durch Öffnungen in der Läufer-Statoranordnung, wie beispielsweise den Luftspalt, entweichen und führt dabei in den betreffenden, geöffneten Bereichen zu einem Luftstrom.

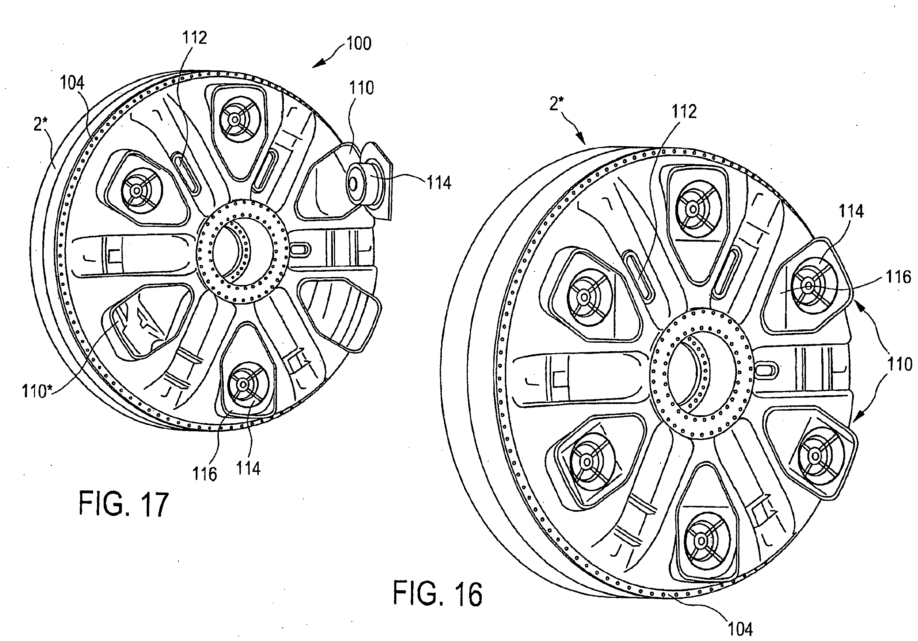

Fig. 16 zeigt die Statorglocke 100 zusammen mit einem Statorring 2*, der an der Statorringbefestigung 104 an der Statorglocke 100 befestigt ist. Außerdem ist in jeder Gebläseöffnung 110 ein Gebläse 114 angeordnet, das zusammen mit einer Gebläseabdeckung 116 die Gebläseöffnung 110 verdeckt und verschließt.

Durch Inbetriebnehmen eines oder mehrerer der Gebläse 114 wird Luft in den von der Statorglocke 100 eingeschlossenen bzw. abgedeckten Raum geblasen. Die Luft kann durch Öffnungen in dem Generator, von dem der Statorring 2* einen Teil bildet, entweichen und für Kühlung sorgen. Dafür sind auch die Hilfsöffnungen 112 mit einer Abdeckung verschlossen, was in der Fig. 16 jedoch nicht näher dargestellt ist. Natürlich könnten die Gebläse 114 auch so arbeiten, dass sie Luft aus dem von der Statorglocke 100 abgedeckten Raum heraussaugen, gemäß Fig. 16 also im Wesentlichen nach rechts aus der Zeichnungsebene heraus. Gleichwohl wird im bevorzugten Fall Luft in den abgedeckten Raum hineingeblasen, die bei bestimmungsgemäßer Anordnung der Statorglocke 100 aus einer entsprechenden Gondel stammt und gegenüber Außenluft von außerhalb der Gondel eine bessere Reinheit und Trockenheit erwarten lässt.

Fig. 17 verdeutlicht nun, wie erfindungsgemäß die Gebläseöffnungen 110 für Wartungs- oder andere Zwecke verwendet werden können. Beispielsweise ist bei einer Gebläseöffnung 110 das Gebläse 114 mittels eines Scharniers weggeklappt und die Gebläseöffnung 110 entsprechend aufgeklappt. Durch diese so geöffnete Gebläseöffnung 110 kann nun eine Person durch die Statorglocke 100 nämlich durch die Gebläseöffnung 110 zum dahinter angeordneten Ringgenerator gelangen. Ebenso kann für das Gebläse 114 anstelle eines Scharniers zum Klappen eine andere Bewegungsmechanik vorgesehen sein. Auch ein Schnellspannverschluss kann auf einfache Weise zum Öffnen einer Gebläseöffnung 110 verwendet werden. Hierzu ist ein solcher Schnellspannverschluss mit wenigen Handgriffen zu lösen und das entsprechende Gebläse 114 zu entnehmen. Wird eine Gebläseöffnung nur teilweise geöffnet oder ist die Öffnung durch andere Einrichtungen weiter gesperrt wie z. B. bei der Öffnung 110* gezeigt ist, so dass eine Person nicht hindurch steigen kann, so kommt immerhin noch eine teilweise Wartung, der unmittelbar hinter der Öffnung angeordneten Einrichtungen in Betracht. Das gleiche gilt für die kleiner ausgestalteten Hilfsöffnungen 112.

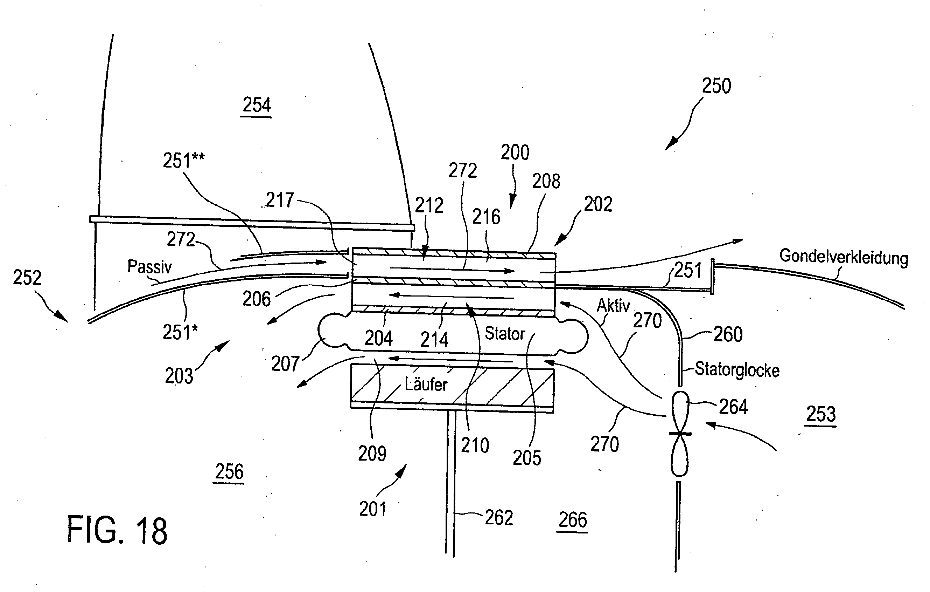

Fig. 18 erläutert schematisch das erfindungsgemäße Gesamtkonzept anhand einer beispielhaften Ausführungsform. Fig. 18 zeigt in einer seitlichen Schnittansicht ausschnittsweise eine Gondel 250 mit einem Rotor 252 mit Rotorblättern 254, einem Ringgenerator 200 mit einem Läufer 201 und einem Stator 203 mit einem Statorring 202 und einem Blechpaket 205 mit Statorwicklungen 207, die nur schematisch angedeutet sind. Zwischen dem Stator 203 und dem Läufer 201 ist ein Luftspalt 209 angeordnet. Der Statorring 202 weist einen inneren Tragring 204, einen mittleren Tragring 206 und einen äußeren Tragring 208 auf. Zwischen dem inneren und äußeren Tragring 206, 208 sind passive Kühlkanäle 216 vorgesehen, die einen passiven Kühlabschnitt 212 bilden. Aktive Kühlkanäle 214 sind zwischen dem inneren Tragring 204 und dem mittleren Tragring 206 angeordnet und bilden einen aktiven Kühlabschnitt 210.

Im Bereich des mittleren Tragrings 206 ist eine Statorglocke 260 befestigt und es ist im Anschluss an den magnetisch wirksamen Teil des Läufers 201 ein Trennabschnitt 262 vorgesehen. In der Statorglocke 260 sind Gebläse 264 angeordnet, die zu einem Überdruck in dem Druckraum 266, der im Wesentlichen zwischen der Statorglocke 260 und dem Trennabschnitt 262 angeordnet ist, führen. Aufgrund des so aufgebauten Drucks im Druckraum 266 strömt Luft durch den Luftspalt 209 und die aktiven Kühlkanäle 214. Der Generator, insbesondere der Stator wird somit durch den Luftstrom 270 durch den Luftspalt 209 und die aktiven Kühlkanäle 214 gekühlt.

Abschnitte der Gondelverkleidung 251 einschließlich Abschnitte der Nabenverkleidung 251* verlaufen auf Höhe des mittleren Tragrings 206. Bezogen auf die Gondel 250 ist somit der Ringgenerator 200 bis einschließlich dem aktiven Kühlabschnitt 210 innerhalb der Gondel 250 angeordnet. Nur der passive Kühlabschnitt 212 und somit die passiven Kühlkanäle 216 sind außerhalb der Gondel 250 angeordnet. Der Rotor 252 und Rotorblatt 254, also gemäß Fig. 18 der links dargestellte Teil der Gondel 250, nämlich die Nabe mit Nabenverkleidung 251* bzw. Spinner ist bestimmungsgemäß dem Wind zugewandt. Wind, der die Gondel 250 anströmt, strömt somit zunächst entlang der Nabenverkleidung 251 * im Bereich des Rotors 252.

Die Gondenverkleidung 251* ist in einem Bereich abgesenkt und damit auf gleicher Höhe wie der mittlere Tragring 206. Im Bereich des Rotorblattansatzes kann die Nabenverkleidung auf Höhe des äußeren Tragrings 208 sein, wie in der Fig. 18 durch das Bezugszeichen 251** gezeigt ist. Die Fig. 18 zeigt insoweit eine Momentaufnahme. Es ist zu erwähnen, dass an dem Statorring 202 im Bereich des mittleren Tragrings 206 auf der Seite zur Nabenabdeckung 251 * hin eine Regenrinne angebaut sein kann, um das Eintreten von Regenwasser in dem Bereich zu verhindern und somit die innerhalb der Gondel angeordneten Elemente des Ringgenerators 200 vor Regenwasser zu schützen,

Anschließend gelangt der Wind vom Bereich der tiefergezogenen Nabenverkleidung 251* in den Bereich der Einströmöffnungen 217 und zum passiven und damit äußeren Kühlabschnitt 212 und kann dort durch die Einströmöffnungen 217 in die passiven Kühlkanäle 216 einströmen und den Statorring 202 in diesem Bereich kühlen.

Es ist zu beachten, dass das Gebläse 264 zu einer aktiven Kühlströmung 270 führt, die durch den Luftspalt 209 und die aktiven Kühlkanäle 214 strömt. Der Wind führt zu einer passiven Kühlströmung 272, die durch die passiven Kühlkanäle 216 strömt. Es ist zu beachten, dass die aktive Kühlströmung 270 der Richtung der passiven Kühlströmung 272 entgegengesetzt ist. Im Grunde drückt nämlich das bzw. die Gebläse 264 Luft aus dem Gondelinnenraum 253 durch die Statorglocke 260 in den Druckraum 266 und von dort durch den Luftspalt 209 und die aktiven Kühlkanäle 214 nach außen in Richtung zur Rotornabe 256 und damit dem Wind entgegen.

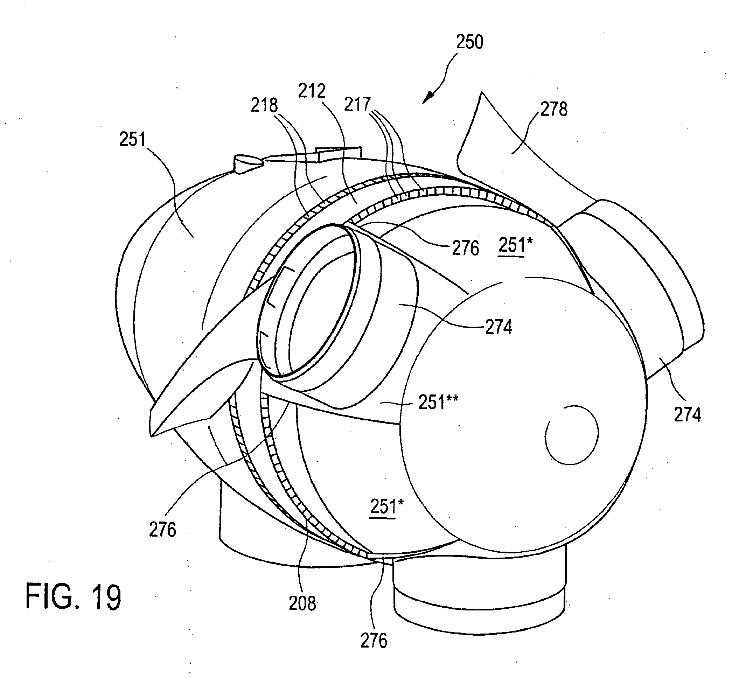

Die Darstellungen gemäß den Fig. 19 bis 22 zeigen eine Gondel 250 schematisch. Insbesondere sind ein Turm, Rotorblätter und etwaige Gondelaufbauten wie ein Anemometer oder dergleichen nicht oder nur im Ansatz dargestellt. Die Perspektive gemäß Fig. 19 schräg von vorn auf die Gondel 250 zeigt im Wesentlichen die Gondelverkleidung 251 und die Nabenverkleidung 251* bzw. 251**. Insbesondere ist ein Teil des Kranzes der Auslassöffnungen 218 und Einlassöffnungen 217 des passiven Kühlabschnitts 212 zu erkennen. Gemäß Fig. 19 kommt der Wind somit bestimmungsgemäß etwa von rechts in die Zeichenebene hinein, strömt entlang der Nabenverkleidung 251 in die Einströmöffnungen 217 durch passive Kühlkanäle im passiven Kühlabschnitt 212 und verlässt den passiven Kühlabschnitt 212 wieder im Bereich der Ausströmöffnungen 218. Dabei strömt der Wind bestimmungsgemäß etwa in axialer Richtung in die Einströmöffnungen 217 ein, während er die Ausströmöffnung 218 zumindest teilweise in radialer Richtung nach außen gerichtet verlässt.

In der Fig. 19 sind an der Nabenabdeckung 251 * bzw. 251** drei Rotorblattansätze 274 zu erkennen. In deren Nähe ist - in Fig. 19, insbesondere bei dem links dargestellten Rotoransatz 274 - eine Übergangskante 276 zwischen dem höheren Bereich der Nabenabdeckung 251** und dem niedrigeren Bereich der Nabenabdeckung 251* zu erkennen. Der höhere Nabenabdeckungsbereich 251** fluchtet etwa mit dem äußeren Tragring 208 und verdeckt somit die Einströmöffnungen 217. Der niedrigere Bereich der Nabenabdeckung 251* fluchtet etwa mit dem mittleren Tragring 206, so dass die Einströmöffnungen 217 in dem betreffenden Bereich zu sehen sind und auch vom Wind erreichbar sind.

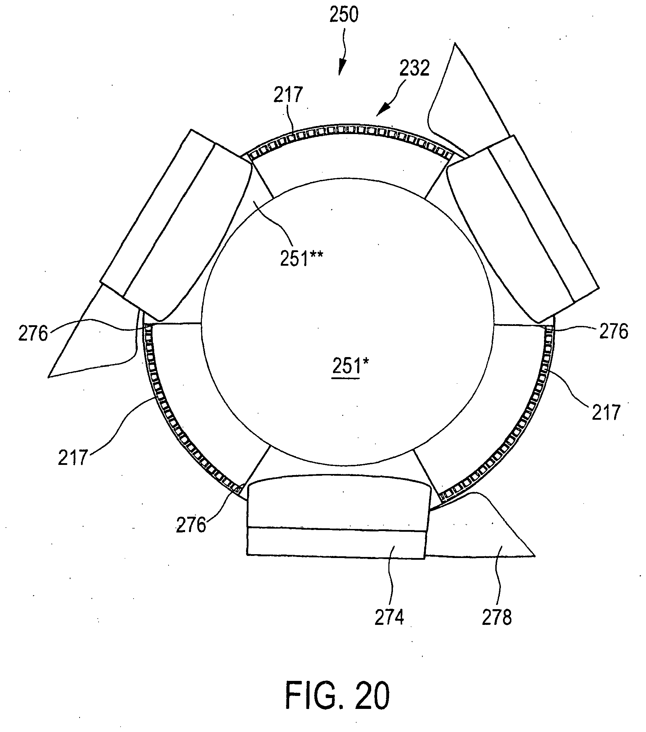

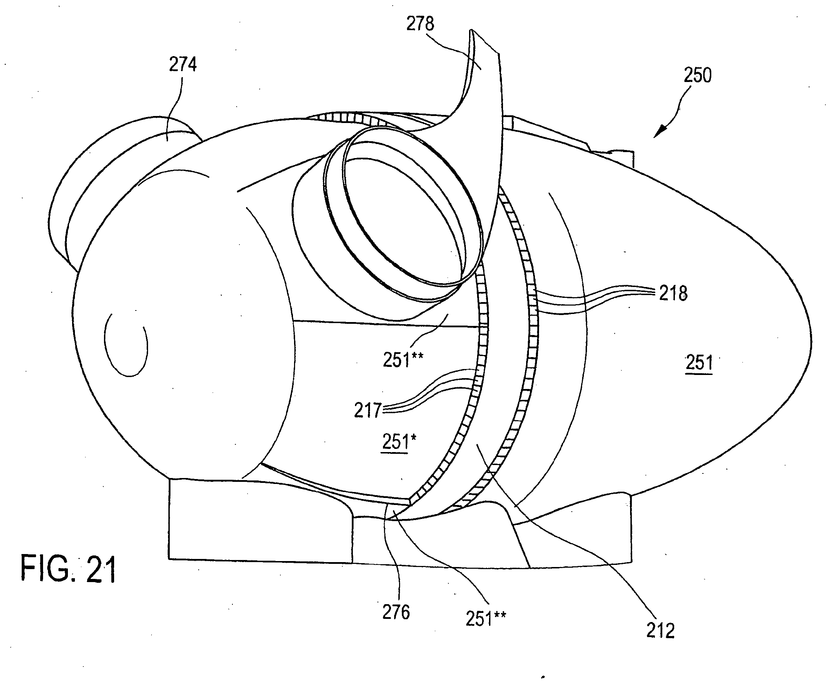

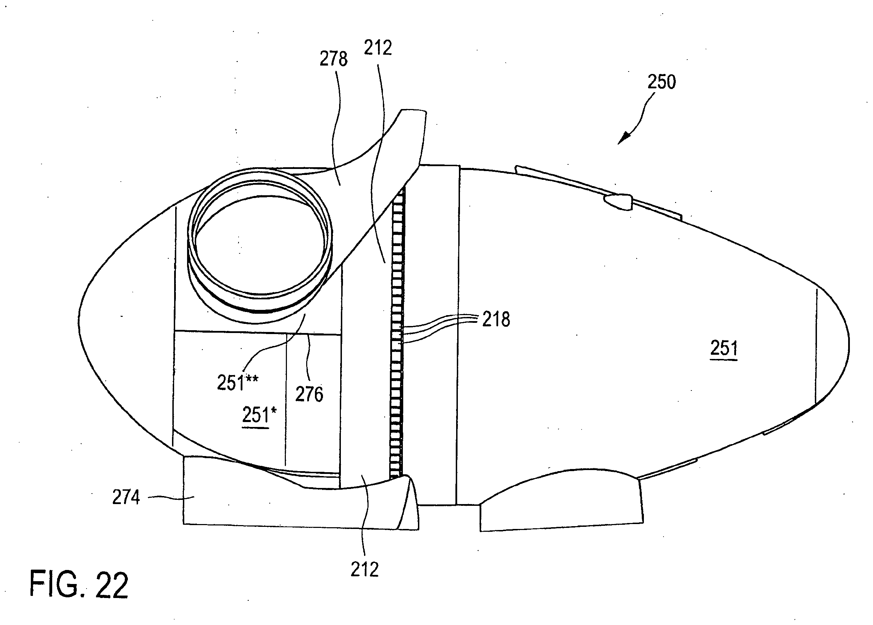

Aus der frontalen Sicht auf die Gondel 250 gemäß Fig. 20 sind im Wesentlichen die Nabenabdeckung 251* bzw. 251** und die Einströmöffnungen 217 zu erkennen. Die Perspektive gemäß Fig. 20 entspricht der bestimmungsgemäßen Einströmrichtung durch den Wind. Im Übrigen ist in 12-Uhr-Stellung der luvseitige Außenbefestigungsbereich 232 angeordnet. Aus der weiteren perspektivischen Ansicht gemäß Fig. 21 und der perspektivischen Seitenansicht gemäß Fig. 22 wird deutlich, dass gondelseitige Rotorblattabschnitte 278 den Bereich des passiven Kühlabschnitts 212 und dabei die Einströmöffnungen 217 und Ausströmöffnungen 218 überstreichen können.

Nachfolgend werden Ausführungsformen beschrieben, die das Verständnis der Erfindung erleichtern und den erfindungsgemäßen Ringgenerator der Ansprüche 1 bis 6 weiterbilden können.

### Ausführungsform 1:

Ringgenerator einer Windenergieanlage, mit einem Stator mit einem umlaufenden Statorring zum Aufnehmen eines Blechpakets mit Statorwicklungen und einem relativ zum Stator drehbar um eine Drehachse gelagerten Läufer, wobei der Ringgenerator als Innenläufer ausgebildet ist und der Statorring Kühlkanäle zum Kühlen des Stators durch einen Luftstrom aufweist.

### Ausführungsform 2:

Ringgenerator nach Ausführungsform 1, dadurch gekennzeichnet, dass wenigstens einige Kühlkanäle zur aktiven Kühlung durch einen forcierten Luftstrom und/oder einige Kühlkanäle zur passiven Kühlung insbesondere durch den Wind vorbereitet sind.

### Ausführungsform 3.

Ringgenerator nach einer der vorstehenden Ausführungsformen, weiter umfassend eine mit dem Stator, insbesondere Statorring verbundene Statorglocke zum Schaffen eines Druckraums mit einem Über- oder Unterdruck zum Bereitstellen eines aktiven Luftstroms durch den und/oder entlang dem Stator und/oder Läufer zum Kühlen des Ringgenerators.

### Ausführungsform 4:

Ringgenerator nach Ausführungsform 3, dadurch gekennzeichnet, dass der Statorring bezogen auf die Drehachse einen inneren Ringabschnitt zum aktiven Kühlen und einen äußeren Ringabschnitt zum passiven Kühlen aufweist, und dass die Statorglocke so an dem Statorring befestigt ist, dass nur der innere Ringabschnitt vom aktiven Kühlluftstrom angeströmt wird.

### Ausführungsform 5:

Ringgenerator nach Ausführungsform 3 oder 4, dadurch gekennzeichnet, dass die Statorglocke dazu vorbereitet ist, den Statorring zu tragen.

### Ausführungsform 6:

Ringgenerator nach einer der Ausführungsformen 3 bis 5, dadurch gekennzeichnet, dass in der Statorglocke wenigstens eine Gebläseöffnung mit einem Gebläse vorgesehen ist.

### Ausführungsform 7:

Ringgenerator nach einer der vorstehenden Ausführungsformen, dadurch gekennzeichnet, dass einige oder alle Kühlkanäle bezogen auf die Drehachse axial verlaufen.

### Ausführungsform 8:

Ringgenerator nach einer der vorstehenden Ausführungsformen, dadurch gekennzeichnet, dass eine Vielzahl von Kühlkanälen konzentrisch um die Drehachse angeordnet sind und wenigstens einen ringförmigen Kühlbereich bilden.

### Ausführungsform 9:

Ringgenerator nach einer der vorstehenden Ausführungsformen, dadurch gekennzeichnet, dass der Statorring, bezogen auf die Drehachse in radialer Richtung, einen inneren und einen äußeren und optional einen mittleren, stabilisierenden Tragring aufweisen, wobei wenigstens zwischen zwei Tragringen ein ringförmiger Kühlbereich ausgebildet ist.

### Ausführungsform 10:

Ringgenerator nach Ausführungsform 9, dadurch gekennzeichnet, dass der mittlere, stabilisierende Tragring vorgesehen ist und dass die bzw. eine Statorglocke an dem mittleren, stabilisierenden Tragring befestigt ist und dadurch der Statorring und damit der Stator von der Statorglocke getragen wird.

### Ausführungsform 11:

Ringgenerator nach Ausführungsform 9 oder 10, dadurch gekennzeichnet, dass benachbarte Kühlkanäle eines Kühlbereichs durch Begrenzungswände gegeneinander abgegrenzt sind und die Begrenzungswände Verbindungsstege zwischen zwei benachbarten stabilisierenden Tragringen bilden und/oder zwei benachbarte Tragringe durch Kühlrippen miteinander verbunden sind.

### Ausführungsform 12:

Ringgenerator nach einer der vorstehenden Ausführungsformen, dadurch gekennzeichnet, dass wenigstens einer, vorzugsweise alle Kühlkanäle wenigstens eines Kühlbereichs im axialen Querschnitt eine Dreiecksform aufweisen und/oder jeweils zwei benachbarte Kühlkanäle zusammen im axialen Querschnitt die Form eines Parallelogramms bilden und/oder die Kühlkanäle wenigstens eine zur Kühlkanalinnenseite weisende Kühlrippe aufweisen.

### Ausführungsform 13:

Ringgenerator nach einer der vorstehenden Ausführungsformen, dadurch gekennzeichnet, dass der Statorring segmentiert ist, insbesondere aus zwei, drei, vier oder mehr im Wesentlichen symmetrischen Kreissegmenten zusammengesetzt ist.

### Ausführungsform 14:

Ringgenerator nach einer der vorstehenden Ausführungsformen, dadurch gekennzeichnet dass der Statorring zumindest im Bereich der Kühlkanäle aus Aluminium und/oder einer Aluminiumlegierung gefertigt ist und/oder aus einem Material gegossen ist.

### Ausführungsform 15:

Ringgenerator nach einer der vorstehenden Ausführungsformen, dadurch gekennzeichnet, dass passive Kühlkanäle vorgesehen sind mit jeweils einer in axiale Richtung weisenden Einströmöffnung und einer zumindest teilweise radial nach außen weisenden Ausströmöffnung.

### Ausführungsform 16:

Ringgenerator nach Ausführungsform 15, dadurch gekennzeichnet, dass die Ausströmöffnung als Saugöffnung vorgesehen ist, so dass ein den Statorring von außen axial anströmender Wind an der Ausströmöffnung eine Saugwirkung erzeugt und/oder zum Begünstigen einer Saugwirkung auf die Ausströmöffnung der Statorring in axialer Richtung im Bereich der Ausströmöffnung eine gewölbte Oberfläche aufweist.

## Patentansprüche

1. Ringgenerator für eine Windenergieanlage mit einem Stator mit einem umlaufenden Statorring zum Aufnehmen von Statorwicklungen, einem relativ zum Stator drehbar gelagerten Läufer und eine mit dem Statorring verbundene Statorglocke zum Schaffen eines Druckraums mit einem Über- oder Unterdruck zum Bereitstellen eines Luftstroms durch den und/oder entlang dem Stator und/oder Läufer zum Kühlen des Ringgenerators, wobei die Statorglocke wenigstens eine mit einem Gebläse versehene Gebläseöffnung aufweist und das Gebläse mittels einer Bewegungsmechanik beweglich gelagert ist oder durch eine Schnellspannvorrichtung befestigt ist, um die Gebläseöffnung zu Wartungszwecken und/oder zum Passieren für eine Person temporär zu öffnen.

2. Ringgenerator nach Anspruch 1,
**dadurch gekennzeichnet, dass** die Bewegungsmechanik als Schwenkmechanismus ausgebildet ist.

3. Ringgenerator nach Anspruch 1 oder 2,
**dadurch gekennzeichnet, dass** die Statorglocke einen ersten Befestigungsabschnitt zum Befestigen mit einem Maschinenträger einer Windenergieanlage aufweist und mehrere, sich davon in einer sternförmigen Anordnung nach außen zu einem zweiten Befestigungsabschnitt zum Befestigen mit dem Statorring erstreckende Tragabschnitte, insbesondere Tragarme aufweist, so dass der Statorring über die Tragabschnitte an dem Maschinenträger getragen werden kann.

4. Ringgenerator nach Anspruch 3,
**dadurch gekennzeichnet, dass** die wenigstens eine Gebläseöffnung jeweils zwischen zwei Tragabschnitten angeordnet ist.

5. Ringgenerator nach einem der Ansprüche 1-4,
**dadurch gekennzeichnet, dass** die Statorglocke im Wesentlichen aus Metall, insbesondere Gusseisen, bevorzugt Sphäroguss besteht und/oder aus einem Stock gegossen ist.

6. Ringgenerator nach einem der vorstehenden Ansprüche,
**gekennzeichnet durch** eine Nennleistung von wenigstens 30 kW, vorzugsweise wenigstens 300 kW, weiter bevorzugt wenigstens 1 MW.

7. Verfahren zum Steuern einer Windenergieanlage, wobei die Windenergieanlage einen Ringgenerator nach einem der vorstehenden Ansprüche aufweist, umfassend die Schritte:
- Erfassen einer durch den Ringgenerator erzeugten elektrischen Leistung und
- Einschalten wenigstens eines in einer Statorglocke eingebauten Gebläses, um einen Luftstrom durch den und/oder entlang dem Stator und/oder Läufer zum Kühlen des Ringgenerators zu erzeugen, wenn die erfasste elektrische Leistung einen vorbestimmten Wert erreicht und/oder überschreitet.

8. Verfahren nach Anspruch 7,
**dadurch gekennzeichnet, dass** als vorbestimmter Wert ein Wert von oder oberhalb von 30 %, vorzugsweise 50 % und weiter bevorzugt 80 % der Nennleistung der Windenergieanlage festgelegt, insbesondere Nennleistung als vorbestimmter Wert festgelegt wird.

9. Windenergieanlage mit einer Gondel und einem Ringgenerator nach einem der Ansprüche 1-6 und/oder wobei in der Windenergieanlage ein Verfahren nach einem der Ansprüche 7 bis 8 implementiert ist.

10. Windenergieanlage nach Anspruch 9, mit einer Gondel und einem Ringgenerator und der Ringgenerator umfasst einen Stator mit einem umlaufenden Statorring zum Aufnehmen eines Blechpakets mit Statorwicklungen, und einen relativ zum Stator drehbar um eine Drehachse gelagerten Läufer, wobei der Ringgenerator als Innenläufer ausgebildet ist, **dadurch gekennzeichnet, dass** der Ringgenerator bis auf einen äußeren Abschnitt des Statorring innerhalb der Gondel angeordnet ist, und der äußere Abschnitt des Statorring außerhalb der Gondel angeordnet ist, um zum Kühlen von Wind angeströmt zu werden.

11. Windenergieanlage nach Anspruch 10,
**dadurch gekennzeichnet, dass** der äußere Abschnitt des Statorring Kühlmittel, insbesondere Kühlkanäle zur passiven Kühlung aufweist, die unmittelbar dem Wind ausgesetzt sind.

12. Windenergieanlage nach Anspruch 10 oder 11,
**dadurch gekennzeichnet, dass** die Gondel aerodynamisch so geformt ist, dass der Wind im Wesentlichen laminar an der Gondel entlang zum äußeren Abschnitt des Statorring strömen kann, um eine Kühlwirkung an dem äußeren Abschnitt des Statorring zu begünstigen.

13. Windenergieanlage nach einem der Ansprüche 10 bis 12,
**dadurch gekennzeichnet, dass** außerhalb der Gondel im Bereich der äußeren Abschnitte des Statorrings Strömungsmittel vorgesehen sind zum Begünstigen einer Windströmung entlang des äußeren Abschnitts des Statorrings.

## Claims

1. Ring generator for a wind turbine having a stator having a peripheral stator ring for receiving stator windings, an armature which is rotatably arranged relative to the stator and a stator cover which is connected to the stator ring for providing a pressure chamber having an excess pressure or a reduced pressure for providing an air flow through and/or along the stator and/or the armature in order to cool the ring generator, the stator cover having at least one fan opening which is provided with a fan and the fan is movably supported by means of a movement mechanism or is secured by means of a rapid clamping device in order to temporarily open the fan opening for the purposes of maintenance and/or for a person to pass.

2. Ring generator according to claim 1, **characterised in that** the movement mechanism is constructed as a pivot mechanism.

3. Ring generator according to claim 1 or claim 2, **characterised in that** the stator cover has a first securing portion for securing to a machine carrier of a wind turbine and a plurality of carrier portions, in particular carrier arms, which extend outwards therefrom in a star-like arrangement to form a second securing portion for securing to the stator ring, so that the stator ring can be carried by means of the carrier portions on the machine carrier.

4. Ring generator according to claim 3, **characterised in that** the at least one fan opening is arranged in each case between two carrier portions.

5. Ring generator according to any one of claims 1 to 4, **characterised in that** the stator cover substantially comprises metal, in particular cast iron, preferably spheroidal graphite cast iron, and/or is cast from one piece.

6. Ring generator according to any one of the preceding claims, **characterised by** a nominal power of at least 30 kW, preferably at least 300 kW, more preferably at least 1 MW.

7. Method for controlling a wind turbine, the wind turbine having a ring generator according to any one of the preceding claims , comprising the steps of:
- detecting an electrical power produced by means of the ring generator and
- switching on at least one fan which is fitted in a stator cover in order to produce an air flow through and/or along the stator and/or armature for cooling the ring generator when the electrical power detected reaches and/or exceeds a predetermined value.

8. Method according to claim 7,**characterised in that** a value in the order of or above 30%, preferably 50% and more preferably 80% of the nominal power of the wind turbine is determined as a predetermined value, in particular nominal power is determined as a predetermined value.

9. Wind turbine having a pod and a ring generator according to any one of claims 1 to 6 and/or wherein a method according to any one of claims 7 to 8 is implemented in the wind turbine.

10. Wind turbine according to claim 9, having a pod and a ring generator and the ring generator comprises a stator having a peripheral stator ring for receiving an assembly of metal sheets having stator windings, and an armature which is supported so as to be able to be rotated about a rotation axis relative to the stator, the ring generator being constructed as an internal armature, **characterised in that** the ring generator, with the exception of an outer portion of the stator ring, is arranged inside the pod, and the outer portion of the stator ring is arranged outside the pod in order to be subjected to wind flow in order to be cooled.

11. Wind turbine according to claim 10, **characterised in that** the outer portion of the stator ring has cooling means, in particular cooling channels, for passive cooling, which are directly subjected to the wind.

12. Wind turbine according to claim 10 or 11, **characterised in that** the pod is aerodynamically formed in such a manner that the wind can flow in a substantially laminar manner along the pod to the outer portion of the stator ring in order to promote a cooling action at the outer portion of the stator ring.

13. Wind turbine according to any one of claims 10 to 12, **characterised in that** there are provided outside the pod in the region of the outer portions of the stator ring flow means for promoting a flow of wind along the outer portion of the stator ring.

## Revendications

1. Générateur annulaire pour une éolienne comprenant un stator avec un anneau de stator circulaire pour recevoir les enroulements du stator, un rotor arrangé de façon rotative par rapport au stator et une cloche de stator reliée à l'anneau de stator, pour fournir une chambre de pression avec une sur- ou sous pression pour fournir un écoulement d'air à travers et/ou le long du stator et/ou du rotor pour le refroidissement du générateur annulaire, dans lequel le la cloche de stator est pourvue d'au moins un orifice ventilateur soufflant et le ventilateur est monté de façon mobile au moyen d'un mécanisme de déplacement, ou est fixé au moyen d'un dispositif de serrage à action rapide à des fins de maintenance de l'orifice soufflant et/ou d'ouverture temporaire pour le passage d'une personne.

2. Générateur annulaire selon la revendication 1, **caractérisé en ce que** le mécanisme de mouvement est conçu comme un mécanisme de pivotement.

3. Un générateur annulaire selon la revendication 1 ou 2, **caractérisé en ce que** la cloche du stator a une première partie de fixation pour être fixée à un support de machine de l'installation d'énergie éolienne et une pluralité de celles-ci dans un agencement en forme d'étoile a l'extérieur d'une deuxième partie de fixation pour la fixation des sections de support s'étendant avec l'anneau de stator, en particulier des bras de support de sorte que l'anneau de stator puisse être supporté par bâti de la machine au moyen des sections de support.

4. Générateur annulaire selon la revendication 3, **caractérisé en ce que** le au moins un orifice ventilateur est disposé à chaque fois entre deux sections de support.

5. Générateur annulaire selon l'une des revendications 1 à 4, **caractérisé en ce que** la cloche de stator est essentiellement constituée de métal, plus particulièrement de fer de fonte, de préférence de fonte nodulaire, et/ou est coulée en une seule pièce.

6. Générateur annulaire selon l'une quelconque des revendications précédentes, **caractérisé par** une puissance nominale d'au moins 30 kW, de préférence d'au moins 300 kW, de préférence d'au moins 1 MW.

7. Procédé de commande d'une installation d'énergie éolienne, dans lequel l'éolienne comprend un générateur annulaire selon l'une quelconque des revendications précédentes , comprenant les étapes consistant à:
- détecter une puissance électrique générée par le générateur annulaire, et
- activer au moins un ventilateur soufflant monté dans la cloche de stator, pour générer un courant d'air à travers et/ou le long du stator et/ou du rotor pour refroidir le générateur annulaire lorsque le courant électrique détecté atteint et/ou dépasse une valeur prédéterminée.

8. Procédé selon la revendication 7, **caractérisé en ce qu'**autant qu'une valeur prédéterminée égale ou supérieure à 30%, de préférence à 50% et plus préférentiellement à 80% de la puissance nominale de l'éolienne est définie comme valeur prédéterminée, en particulier la puissance nominale est définie comme la valeur prédéterminée.

9. Installation d'énergie éolienne avec une nacelle et un générateur annulaire selon l'une des revendications 1 à 6 et/ou où un procédé selon l'une quelconque des revendications 7 à 8 est mis en œuvre dans l'installation d'énergie éolienne.

10. Installation d'énergie éolienne, selon la revendication 9, avec une nacelle et un générateur annulaire, le générateur annulaire comprenant un stator ayant un anneau de stator circulaire pour recevoir un paquet de tôles avec des enroulements de stator, et un rotor qui est rotatif par rapport au stator et est monté autour d'un axe de rotation, ledit générateur annulaire étant conçu comme un rotor interne, **caractérisée en ce que** le générateur annulaire est disposé à une portion extérieure du stator à l'intérieur de la nacelle, et la partie extérieure de l'anneau de stator est disposé à l'extérieur de la nacelle pour recevoir le flux d'air de refroidissement.

11. Installation d'énergie éolienne selon la revendication 10, **caractérisée en ce que** la partie externe de l'anneau de stator comprend un moyen de refroidissement, en particulier des canaux de refroidissement pour le refroidissement passif, qui sont directement exposée au vent.

12. Installation d'énergie éolienne selon la revendication 10 ou 11, **caractérisée en ce que** la nacelle est aérodynamiquement formée de sorte que le vent peut s'écouler de façon sensiblement laminaire le long de la nacelle jusqu'à la partie extérieure de l'anneau de stator, afin de favoriser un effet de refroidissement sur la partie extérieure du stator.

13. Installation d'énergie éolienne selon l'une quelconque des revendications 10 à 12, **caractérisée en ce que**, à l'extérieur de la nacelle dans la zone des parties extérieures de l'anneau de stator des moyens d'écoulement sont prévus pour favoriser l'écoulement d'un flux d'air autour de la partie extérieure de l'anneau de stator.
